# EUROPÄISCHE PATENTSCHRIFT

(11) **EP 3 796 675 B1**
(45) Veröffentlichungstag und Bekanntmachung des Hinweises auf die Patenterteilung: **27.11.2024**
(21) Anmeldenummer: 20188105.9
(22) Anmeldetag: 28.07.2020
(51) Int. Cl.: H04R 25/00, H02J 7/00, H02J 13/00, H02J 50/10

(54) **HÖRGERÄTE-SYSTEM MIT EINEM HÖRGERÄT UND EINER LADESTATION**
HEARING AID SYSTEM WITH A HEARING AID AND A CHARGING STATION
SYSTÈME D'APPAREIL AUDITIF DOTÉ D'UN APPAREIL AUDITIF ET D'UNE STATION DE CHARGE

(30) Priorität: 20.09.2019 DE 102019214381
(43) Veröffentlichungstag der Anmeldung: 24.03.2021
(73) Patentinhaber: Sivantos Pte. Ltd., Singapore 539775 (SG)
(72) Erfinder: CLAD, Lars Johann, 90408 Nürnberg (DE); GÖKAY, Umut, 91058 Erlangen (DE)
(74) Vertreter: FDST Patentanwälte

(56) Entgegenhaltungen:
- EP-A1- 0 814 634
- EP-A2- 2 178 315
- WO-A2-2006/126881
- WO-A2-2010/081915
- US-A1- 2007 104 343
- US-A1- 2013 127 404

## Beschreibung

Die Erfindung betrifft ein Hörgeräte-System mit einem Hörgerät, welches eine wiederaufladbare Batterie zur Leistungsversorgung aufweist, und mit einer Ladestation, welche dazu eingerichtet ist, die Batterie des Hörgerätes wenigstens zeitweise zu laden, wenn das Hörgerät bezüglich der Ladestation in einer Ladeposition angeordnet ist. Die Erfindung nennt weiter ein Verfahren zum Anpassen wenigstens eines eine Signalverarbeitung eines Hörgerätes betreffenden Parameters.

Ein Hörgerät wird üblicherweise von einem Träger zu dem Zweck getragen, eine Hörschwäche wenigstens teilweise auszugleichen. Hierfür sind im Hörgerät meist einer oder mehrere Eingangswandler, z.B. in der Form von Mikrofonen, angeordnet, welche einen Umgebungsschall in entsprechende elektrische Eingangssignale umwandeln, die dann in Abhängigkeit der zu korrigierenden Hörschwäche verarbeitet und dabei u.a. meist frequenzbandabhängig verstärkt werden. Das Ausgangssignal der auf den Träger abgestimmten Signalverarbeitung wird dann über einen Ausgangswandler, meist in Form eines Lautsprechers, in einen Ausgangsschall umgewandelt, welcher dem Gehör des Trägers zugeführt wird.

Eine wesentliche Kernaufgabe des Hörgerätes besteht hierbei darin, einerseits Nutzsignalanteile im Umgebungsschall - z.B. Sprachbeiträge - von einem Hintergrundrauschen abzuheben, um dadurch die Verständlichkeit des jeweiligen Nutzsignals für den Träger zu verbessern, und andererseits dennoch einen möglichst natürlichen Höreindruck zu bewahren, weswegen die Signalverarbeitung möglichst nicht zu Artefakten oder Verzerrungen führen soll. Hierfür werden im Hörgerät oftmals je nach Art, Pegel und Frequenzgang des Nutzsignals und des Hintergrundrauschens einzelne Hörsituationen als eine Gruppe an standardisierten Typen für die genannten Variablen (in einem entsprechenden Parameterbereich) definiert, und hierzu im Hörgerät jeweils verschiedene unterschiedliche Hörprogramme hinterlegt, welche die einzelnen Parameter der Signalverarbeitung auf die jeweilige standardisierte Hörsituation abstimmen. Durch eine Benutzereingabe kann hierbei der Träger auch das Hörprogramm wechseln, oder einzelne Parameter der Signalverarbeitung anpassen, wenn die eine Hörsituation zugewiesene Voreinstellung für ihn nicht zu einem zufriedenstellenden Ergebnis führt.

Um über die Lebensdauer eines Hörgerätes hinweg die Eingriffe, welche der Träger über Benutzereingaben an den Parametern der Signalverarbeitung vorzunehmen hat, möglichst zu minimieren, können Lernalgorithmen eingesetzt werden, welche einzelne, vom Träger vorgenommene Änderungen an den einer Hörsituation oder allgemein bestimmten akustischen Messwerten zugeordneten Voreinstellungen der Parameter der Signalverarbeitung systematisieren. Hieraus kann in Abhängigkeit der Hörsituation und der vorgenommenen Änderung eine Vorhersage für zukünftige Hörsituationen getroffen werden. Aber auch ohne eine Benutzereingabe kann beispielsweise für die Regelung von Verstärkungsfaktoren ein Muster für das Auftreten von Rückkopplungen erkannt werden, und dieses Muster für die zukünftige Signalverarbeitung berücksichtigt werden.

Derartige Lernalgorithmen benötigen für eine automatische Anpassung der Parameter der Signalverarbeitung, also insbesondere für das Ermitteln einer neuen Voreinstellung anhand des bisherigen Verlaufes der Parameter der Signalverarbeitung in Abhängigkeit der akustischen Gegebenheiten, eine möglichst große Menge an Verlaufsdaten. Diese können jedoch durch das Hörgerät infolge des stark begrenzten physischen Platzes für Datenspeicher oftmals nicht ausreichend bereitgestellt werden.

In der EP 2 178 315 A2 ist ein Hörsystem genannt, welches eine Ladestation und ein Hörgeräten mit einer wiederaufladbaren Batterie zum Versorgen des Hörgeräts und einem flüchtigen Datenspeicher umfasst. Im Normalbetrieb sind im flüchtigen Datenspeicher Basisdaten für die Konfiguration des Hörgeräts gespeichert. Die Ladestation ist geeignet, das Hörgerät aufzunehmen und die Batterie aufzuladen, wobei die Ladestation ferner einen Datenspeicher umfasst, in dem die Basisdaten für die Konfiguration des Hörgeräts speicherbar sind. Über eine Kommunikationsverbindung zwischen Ladestation und Hörgerät können die Basisdaten für die Konfiguration des Hörgeräts vom Datenspeicher der Ladestation in den flüchtigen Datenspeicher des Hörgeräts übertragen werden, wenn das Hörgerät in der Ladestation angeordnet ist.

Die WO 2010 / 081915 A2 nennt eine Vorrichtung zur Programmierung eines Hörgerätes, welche zudem dazu eingerichtet ist, einen Energiespeicher des Hörgerätes zu laden. Durch die Programmierung können für einzelne Parameter des Hörgerätes, welche die Signalverarbeitung unmittelbar beeinflussen (z.B. frequenzbandweise Ausgangspegel, Kompressionsverhältnisse o.ä.), direkt Werte festgelegt werden.

Die WO 2006 / 126881 A2 nennt ein Hörgerät, welches mit einem Brillengestell verbindbar ausgestaltet ist. Indem das Brillengestell teilweise in eine Ladevorrichtung eingebracht wird, kann eine Batterie des Hörgerätes geladen werden. Beim Ladevorgang kann die Ladespannung in einer solchen Weise moduliert werden, dass hierdurch Informationen, z.B. hinsichtlich eines Resets auf die Voreinstellung, an das Hörgerät übertragen werden können.

In der US 2007 / 0 104 343 A1 ist eine Ladestation für ein Hörgerät offenbart, welche zusätzliche Mittel für eine unidirektionale oder bidirektionale Datenübertragung zum Hörgerät aufweist.

Der Erfindung liegt daher die Aufgabe zugrunde, für ein Hörgerät in möglichst einfacher und umfassend kompatibler Weise größere Mengen an Betriebsdaten zu speichern. Der Erfindung liegt weiter die Aufgabe zugrunde, ein Verfahren zur Anpassung von Parametern der Signalverarbeitung eines Hörgerätes anzugeben, welches auf möglichst umfassende Betriebsdaten zurückgreifen können soll.

Die erstgenannte Aufgabe wird erfindungsgemäß gelöst durch ein Hörgeräte-System gemäß Anspruch 1. Vorteilhafte und teils für sich gesehen erfinderische Ausgestaltungen sind Gegenstand der Unteransprüche und der nachfolgenden Beschreibung.

Die wiederaufladbare Batterie ist hierbei insbesondere während des Betriebs des Hörgerätes in einem Gehäuse des Hörgerätes angeordnet, und wird bevorzugt über eine entsprechende Verbindung zur Energieübertragung mit dem Hörgerät beladen, ohne dass dazu die Batterie aus dem Gehäuse zu entfernen ist. Unter dem Begriff einer wiederaufladbaren Batterie ist insbesondere eine solche Batterie zu verstehen, welche dazu eingerichtet ist, eine in geeigneter Weise zugeführte elektrische Energie aufzunehmen und zu speichern, und die gespeicherte Energie bei einem Anlegen einer elektrischen Last in einem die Batterie umfassenden Stromkreis an die Last abzugeben, wobei insbesondere eine Mehrzahl an Ladevorgängen bis zum Erreichen einer maximalen Energiekapazität der Batterie und eine jeweils anschließende vollständige oder teilweise Entladung möglich ist.

Bevorzugt sind das Hörgerät und die Ladestation für ein Laden der Batterie entsprechend zum Aufbau einer Verbindung zur Energieübertragung von der Ladestation an das Hörgerät eingerichtet, wenn das Hörgerät in der Ladeposition angeordnet ist, und entsprechend auch zum Aufbau einer Datenverbindung für eine Übertragung der Betriebsdaten vom Hörgerät an die Ladestation eingerichtet, wenn das Hörgerät in der Übertragungsposition angeordnet ist.

Insbesondere ist das Hörgerät bezüglich der Ladestation in einer Ladeposition angeordnet, indem es an einen Ladestecker der Ladestation angeschlossen ist, oder für ein kabelloses Laden in einem entsprechenden Ladeschacht eingelegt oder auf einer Ladeplatte aufgelegt ist. Die Übertragungsposition kann insbesondere identisch zur Ladeposition sein, und bevorzugt erfolgt die Energieübertragung von der Ladestation zum Hörgerät für den Ladevorgang der Batterie auf dieselbe Weise wie die Übertragung der Betriebsdaten vom Hörgerät an die Ladestation, also z.B. über galvanische Kontakte, ein gemeinsames Lade- und Datenkabel, oder über ein Ladekabel und ein hiervon getrenntes Datenkabel, oder über eine drahtlose Datenverbindung mit einem entsprechenden Übertragungsprotokoll (wie z.B. NFC oder Bluetooth) und eine induktive Energieübertragung für ein kabelloses Laden (z.B. Qi Charging). Neben herkömmlichen Energiequellen wie einer Steckdose kann die Energie auch durch eine mobile Energiequelle wie z.B. eine Powerbank, ein Smartphone, einen Laptop oder einen Energiewandler wie z.B. ein Solarzellenmodul bereitgestellt werden.

Insbesondere ist also die Ladeposition durch eine räumliche Anordnung des Hörgerätes relativ zur Ladestation sowie durch eine Verbindung zur Energieübertragung oder - im Fall einer kabellosen Energieübertragung - durch die räumliche Anordnung des Hörgerätes derart, dass die Energieübertragung ermöglicht ist, gegeben. Analog dazu ist die Übertragungsposition insbesondere durch räumliche Anordnung des Hörgerätes relativ zur Ladestation sowie durch eine Verbindung zur Datenübertragung oder - im Fall einer kabellosen Datenübertragung - durch die räumliche Anordnung des Hörgerätes derart, dass die Datenübertragung ermöglicht ist, gegeben.

Der zweite Datenspeicher ist hierbei insbesondere physisch in die Ladestation integriert, d.h., neben der für das Aufladen der Batterie des Hörgerätes erforderlichen Komponenten (also insbesondere Komponenten zur Spannungsaufbereitung und Energieübertragung an ein in der Ladeposition angeordnetes Hörgerät) ist auch der zweite Datenspeicher integraler Bestandteil der Ladestation. Die Ladestation weist hierbei bevorzugt ein Gehäuse auf, welches alle genannten elektronischen Komponenten - ggf. mit Ausnahme eines Netzadapter und/oder -kabels zum Anschluss an ein Stromnetz - umgibt.

Unter dem Begriff eines wenigstens zeitweisen Ladens ist hierbei insbesondere ein Ladevorgang zu verstehen, bei welchem zum Zweck einer möglichst optimalen Energieübertragung und/oder einer möglichst langen Lebensdauer der Batterie kein streng kontinuierliches Laden der Batterie erfolgt, sondern ggf. kurzzeitige Pausen im Vorgang der Energieeinspeisung in die Batterie erfolgen können, wobei gemittelt über den gesamten Zeitraum, welchen das Hörgerät bezüglich der Ladestation in der Ladeposition angeordnet ist, durch das Beladen eine Zunahme der in der Batterie gespeicherten Energie erfolgt. Insbesondere kann dabei das Hörgerät über mehrere Stunden, z.B. eine Nacht hindurch, in der Ladeposition angeordnet sein, während die Energieeinspeisung zum Laden der Batterie selbst wesentlich kürzer ist (beispielsweise in der Größenordnung von Minuten).

Der erste Datenspeicher kann hierbei insbesondere als ein nichtflüchtiger Speicher im Hörgerät ausgestaltet sein, und dabei insbesondere physisch in einem zentralen nichtflüchtigen Hauptspeicher des Hörgerätes implementiert sein, in welchem auch ein Betriebssystem sowie grundsätzliche Funktionen und akustische Einstellungen des Hörgerätes gespeichert sind. Somit können Betriebsdaten im ersten Speicher auch dann weiter gespeichert werden, wenn das Hörgerät in einer Betriebspause abgeschaltet wird, also z.B. nachts, und dabei jedoch nicht in die Lade- und Übertragungsposition gebracht wird. Alternativ dazu kann der erste Datenspeicher als ein flüchtiger Speicher des Hörgerätes ausgestaltet sein, z.B. als eine RAM ("random access memory"), welche auch für die algorithmischen Operationen zur Signalverarbeitung im laufenden Betrieb des Hörgerätes nutzbar ist. In diesem Fall sind Betriebsdaten, welche im ersten Datenspeicher gespeichert sind, vor einem Abschalten des Hörgerätes auf den zweiten Datenspeicher der Ladestation zu übertragen, um die Betriebsdaten vor einem Verlust zu schützen.

Das Hörgerät ist dazu eingerichtet, als Betriebsdaten insbesondere eine Information zu einer vorliegenden Hörsituation, eine Information zum Auftreten einer akustischen Rückkopplung am Hörgerät, vom Hörgerät erhobene akustische Messdaten, eine Benutzereingabe und dabei insbesondere eine Eingabe einer Benutzer-Präferenz hinsichtlich der Signalverarbeitung für eine vorliegende Hörsituation, eine Fehlermeldung und/oder einen vorliegender Wertes eines die Signalverarbeitung des Hörgerätes betreffenden Parameters zu speichern. Als ein die Signalverarbeitung betreffender Parameter sind hierbei und im Folgenden insbesondere ein ggf. frequenzbandabhängiger Verstärkungsfaktor, ein ggf. frequenzbandabhängiger Richtparameter einer Richtmikrofonie, ein ggf. frequenzbandabhängiger Parameter einer Rückkopplungs-Unterdrückung und weitere Parameter, welche aktiv die Signalverarbeitung des Hörgerätes steuern, umfasst. Die Betriebsparameter umfassen somit insbesondere die Parameter der Signalverarbeitung, welche unmittelbar eine Veränderung eines Audiosignals im Hörgerät ansteuern, und weitere Parameter, welche die Hörsituation und/oder die akustische Umgebung beschreiben, und in deren Abhängigkeit im Hörgerät die entsprechenden Parameter der Signalverarbeitung eingestellt werden.

Wenn das Hörgerät für einen Ladevorgang in die Ladeposition gebracht wird, und dabei bevorzugt auch in der Übertragungsposition ist, können zeitgleich zum Ladevorgang oder auch zeitversetzt, also während Pausen der Energieübertragung o.ä., die im ersten Datenspeicher gespeicherten Betriebsdaten vom Hörgerät an die Ladestation übertragen und dort im zweiten Datenspeicher gespeichert werden. Somit ist es möglich, auf dem üblicherweise infolge des beschränkten Platzes nur moderat dimensionierten ersten Datenspeichers des Hörgerätes dennoch die Betriebsdaten in einem für nachträgliche automatisierte Lernvorgänge ausreichenden bzw. vorteilhaften Umfang zu speichern, da bei jedem Ladevorgang die jeweils aktuellsten Betriebsdaten - also insbesondere Informationen zu einzelnen Hörsituationen oder akustischen Szenarien sowie entsprechende Signalparameter-Werte und zugehörige Eingaben oder Einstellungswünsche des Trägers des Hörgerätes - auf dem in der Ladestation angeordneten zweiten Datenspeicher abgespeichert werden können.

Die Ladestation ist nun weiter dazu eingerichtet, im zweiten Datenspeicher gespeicherte Betriebsdaten an das Hörgerät zu übertragen, wenn das Hörgerät in der Übertragungsposition angeordnet ist. Dies bedeutet, dass, wenn das Hörgerät in bzw. an der Ladestation in der Übertragungsposition angeordnet ist, nicht nur aktuelle, im ersten Datenspeicher des Hörgerätes gespeicherte Betriebsdaten an die Ladestation übertragen werden können, sondern umgekehrt auch insbesondere ältere Betriebsdaten, welche bei von vorangegangenen Ladevorgängen auf den zweiten Datenspeicher übertragen und dort gespeichert wurden, für einen Anpassungs- und/oder Bearbeitungsvorgang an das Hörgerät zurück übertragen werden können. Dies erlaubt es insbesondere, für einen derartigen Anpassungsvorgang die rechnerischen Ressourcen des Hörgerätes zu nutzen.

Hierbei weist das Hörgerät eine Rechnereinheit auf, welche dazu eingerichtet ist, anhand der von der Ladestation an das Hörgerät übertragenen Betriebsdaten wenigstens einen eine Signalverarbeitung des Hörgerätes betreffenden Parameter anzupassen. Bevorzugt wird der angepasste Parameter der Signalverarbeitung anschließend in einem nichtflüchtigen Datenspeicher des Hörgerätes abgelegt, welcher insbesondere auch durch den ersten Datenspeicher gegeben sein kann, wenn dieser als nichtflüchtiger Datenspeicher ausgestaltet ist. Dies erlaubt es, für eine Anpassung des wenigstens einen Parameters der Signalverarbeitung in Abhängigkeit der im zweiten Datenspeicher hiterlegten Betriebsparameter die rechnerischen Ressourcen des Hörgerätes, also insbesondere eine für die Signalverarbeitung vorgesehene Prozessoreinheit zu nutzen. Dadurch kann für eine solche Anpassung auf die Bereitstellung einer eigenständigen Rechenleistung durch die Ladestation in Form von Prozessorleistung einer entsprechenden Rechner-und/oder Prozessoreinheit verzichtet werden, was sich auf die Konstruktion der Ladestation kostensparend auswirkt.

Eine automatische Anpassung der einzelnen Hörprogramme und generell der Einstellungen von Parametern der Signalverarbeitung in Abhängigkeit der akustischen Umgebungssituation kann dann anhand der im zweiten Datenspeicher gespeicherten Betriebsdaten erfolgen, welche bei einer ausreichenden Dimensionierung des zweiten Datenspeichers eine für diese Anpassung vorteilhafte, langfristige Benutzerhistorie liefern können. Diese Anpassung erfolgt bevorzugt mittels eines maschinellen Lernalgorithmus, und bedient sich der nativen Rechenkapazität des Hörgerätes, indem die umfangreichen Betriebsdaten des zweiten Datenspeichers an ein in der Lade- und Übertragungsposition angeordnetes Hörgerät übertragen und dort auf einer Rechnereinheit zur Anpassung verarbeitet werden. Bevorzugt wird dabei die verfügbare Speicherkapazität des Hörgerätes, und insbesondere der erste Datenspeicher, für den Anpassungsvorgang wie ein Arbeitsspeicher verwendet, welcher durch die Rechenkapazität des Hörgerätes zur Durchführung der Anpassung adressiert wird.

Bevorzugt ist das Hörgerät dazu eingerichtet, als Betriebsdaten jeweils Daten aus der folgenden Liste an Datentypen zu speichern: Vom Hörgerät erhobene akustische Messdaten, eine Benutzereingabe und hierbei insbesondere eine Eingabe einer Benutzer-Präferenz hinsichtlich der Signalverarbeitung für eine vorliegende Hörsituation, eine Information zu einem technischen Zustand des Hörgerätes, ein vorliegender Wertes eines eine Signalverarbeitung des Hörgerätes betreffenden Parameters, eine zeitliche Information, eine Information hinsichtlich eines in der Nähe des Hörgerätes befindlichen externen Gerätes, eine Auswertung von erhobenen Informationen.

Dies erlaubt einen besonders effizienten Anpassungsvorgang eines Parameters der Signalverarbeitung anhand von im zweiten Datenspeicher gespeicherter Betriebsparameter. Insbesondere werden dabei als Betriebsdaten wenigstens ein Wert eines Parameters der Signalverarbeitung und eine weitere Information zur Hörsituation und/oder hinsichtlich des Umgebungsschalls gespeichert, wobei bevorzugt die Speicherung den wenigstens einen Parameter der Signalverarbeitung der genannten Information zuordnet.

Eine Information zu einem technischen Zustand umfasst dabei insbesondere eine Fehlermeldung und/oder ein Testergebnis eines Self-Checks des Hörgerätes oder einzelner Komponenten oder Sub-Systeme und/oder Log-Files. Unter einem vorliegenden Wert eines eine Signalverarbeitung des Hörgerätes betreffenden Parameters ist insbesondere auch ein eingestelltes Hörgeräterprogramm, ein konkreter Wert einer angewandten, ggf. frequenzbandweisen Verstärkung, Rauschunterdrückung oder Richtwirkung, eine Information zum Einsatz einer Own-Voice-Detection o.ä. umfasst. Vom Hörgerät erhobene akustische Messdaten umfassen insbesondere eine Information zu einer vorliegenden Hörsituation und/oder eine Information zum Auftreten einer akustischen Rückkopplung am Hörgerät, eine Information hinsichtlich eines in der Nähe des Hörgerätes befindlichen Gerätes umfasst insbesondere eine Information über die Art eines solchen externen Gerätes sowie über eine erfolgte Kopplung mit dem externen Gerät, und ggf. in welchem Umfang ein Austausch an Informationen zwischen dem Hörgerät und dem externen Gerät erfolgte.

Eine zeitliche Information umfasst insbesondere eine Tragedauer des Hörgerätesund/oder einen Zeitpunkt, an welchem eine andere, ebenfalls gespeicherte Information erhoben wurde. Eine Auswertung von erhobenen Informationen umfasst insbesondere eine anhand von erfassten Sensordaten o.ä. erkannte Höranstrengung oder sonstige Daten zum körperlichen Befinden des Trägers. Derartige Sensordaten umfassen insbesondere einen Wert einer Körpertemperatur, einer Umgebungstemperatur, eines Blutdrucks, eines Pulses und können dabei durch das Hörgerät selbst erhoben werden und/oder durch ein externes Gerät wie z.B. ein Body-Worn Network oder eine Smartwatch etc. erhoben und an das Hörgerät übertragen werden, und zusätzlich zu den ersten Betriebsdaten gespeichert werden.

Zweckmäßigerweise ist die Ladestation dazu eingerichtet, die Batterie des Hörgerätes mittels einer drahtlosen, insbesondere induktiven Energieübertragung an das Hörgerät zu laden. Für eine drahtlose Energieübertragung ist das Verfahren besonders vorteilhaft, da hierbei die Ladeposition durch ein Auflegen des Hörgerätes auf eine entsprechende Ladeplatte der Ladestation oder durch ein Einlegen des Hörgerätes in einen Ladeschacht mit einer Anzahl an Ladeplatten erreicht werden kann. Insbesondere in Kombination mit einer entsprechenden kabellosen Datenübertragung in der Übertragungsposition, welche bevorzugt durch die Ladeposition gegeben ist, wird somit eine für den Träger besonders bequeme Art ermöglicht, die Betriebsdaten für eine langfristige bzw. dauerhafte Sicherung auf den zweiten Datenspeicher zu übertragen. In einer weiter vorteilhaften Ausgestaltung ist die Ladestation dazu eingerichtet, die Batterie des Hörgerätes mittels einer galvanischen Kopplung zur Energieübertragung an das Hörgerät zu laden.

Vorteilhafterweise ist das Hörgerät dazu eingerichtet, im ersten Datenspeicher gespeicherte Betriebsdaten drahtlos, insbesondere über Bluetooth und/oder über ein vergleichbares Datenübertragungsprotokoll an die Ladestation zu übertragen. Hierdurch muss der Träger keine eigene Kabelverbindung für die Übertragung der Betriebsdaten vom Hörgerät an die Ladestation an das Hörgerät anschließen, was zu einer komfortablen Durchführung des Verfahrens führt. In einer weiter vorteilhaften Ausgestaltung ist das Hörgerät dazu eingerichtet, im ersten Datenspeicher gespeicherte Betriebsdaten mittels einer galvanischen Kopplung zur Datenübertragung an die Ladestation zu übertragen.

Als weiter vorteilhaft erweist es sich hierbei, wenn die Ladestation dazu eingerichtet ist, die im zweiten Datenspeicher gespeicherten Betriebsdaten drahtlos, insbesondere über Bluetooth und/oder über ein vergleichbares Datenübertragungsprotokoll an das Hörgerät zu übertragen. Insbesondere kann hierbei dieselbe Verbindung, also dasselbe drahtlose Übertragungsprotokoll wie z.B. Bluetooth o.ä., verwendet werde wie zur Übertragung der Betriebsdaten des ersten Datenspeichers vom Hörgerät an die Ladestation. Hierdurch wird die Komplexität des Systems gering gehalten, da für die Übertragung keine zusätzlichen Komponenten im Hörgerät oder in der Ladestation erforderlich sind. Aber auch ein Variante mit verschiedenen Übertragungsprotokollen kann von Vorteil sein, wenn die Stabilität einer Übertragung zwischen dem Hörgerät und der Ladestation nicht ausreichend hoch ist, um die Übertragung in beide Richtungen mit nur einer Verbindung bzw. einem Übertragungsprotokoll zu bewerkstelligen.

Die zweitgenannte Aufgabe wird erfindungsgemäß gelöst durch ein Verfahren gemäß Anspruch 7.

Dieses Vorgehen erlaubt eine vorteilhafte Nutzung der rechnerischen Ressourcen des Hörgerätes, sodass die Ladestation nicht eigens mit einer entsprechenden Rechnereinheit ausgestattet zu werden braucht.

Das erfindungsgemäße Hörgeräte-System teilt die Vorzüge des erfindungsgemäßen Verfahrens. Die für das Hörgeräte-System und für seine Weiterbildungen genannten Vorteile können somit sinngemäß auf das Verfahren übertragen werden. Bevorzugt werden während der ersten Ladephase im Wesentlichen alle im ersten Datenspeicher des Hörgerätes gespeicherten ersten Betriebsdaten auf den nichtflüchtigen zweiten Datenspeicher der Ladestation übertragen. Dies erlaubt es, die ersten Betriebsdaten aus dem ersten Datenspeicher zu löschen, sodass dieser für die Anpassung des wenigstens einen Parameters der Signalverarbeitung im Hörgerät als ein Arbeitsspeicher verwendet werden kann, welcher durch die native Rechenkapazität des Hörgerätes adressierbar ist.

Als vorteilhaft erweist es sich, wenn während einer zweiten Betriebsphase des Hörgerätes zweite Betriebsdaten in einem ersten Datenspeicher des Hörgerätes gespeichert werden, wobei der wenigstens eine Parameter der Signalverarbeitung anhand des zweiten Teildatensatzes an ersten Betriebsdaten und anhand wenigstens eines zweiten Teildatensatzes der zweiten Betriebsdaten durch eine Rechnereinheit des Hörgerätes angepasst wird. Hierdurch können die Teile der zuletzt im Hörgerät gespeicherten ersten Betriebsdaten für die Anpassung verwendet werde, ohne an die Ladestation übertragen werden zu müssen.

Günstigerweise werden als die ersten und bevorzugt als die zweiten Betriebsdaten vom Hörgerät erhobene akustische Messdaten, eine Benutzereingabe, eine Information zu einem technischen Zustand des Hörgerätes, ein vorliegender Wert eines eine Signalverarbeitung des Hörgerätes betreffenden Parameters, eine zeitliche Information, eine Information hinsichtlich eines in der Nähe des Hörgerätes befindlichen externen Gerätes, und/oder eine Auswertung von erhobenen Informationen gespeichert.

Nachfolgend wird ein Ausführungsbeispiel der Erfindung anhand von Zeichnungen näher erläutert. Hierbei zeigt:

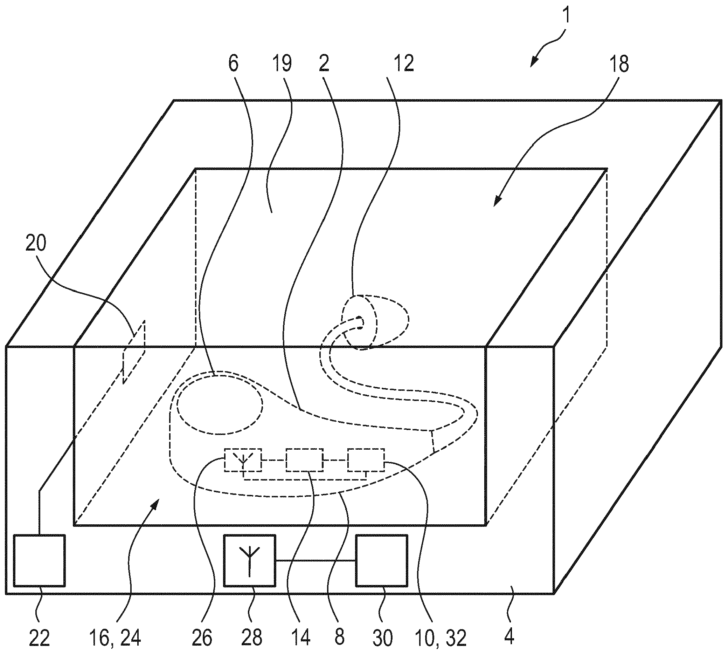

- Fig. 1: ein Hörgeräte-System mit einem Hörgerät und einer Ladestation, welche einen Datenspeicher zum langfristigen Speichern von Betriebsdaten des Hörgerätes aufweist.

In Fig. 1 ist schematisch in einer teilweise transparenten Schrägansicht ein Hörgeräte-System 1 dargestellt, welches ein Hörgerät 2 und eine Ladestation 4 aufweist. Das Hörgerät 2 ist hierbei vorliegend als ein Behind-The-Ear-Gerät (BTE) ausgestaltet, jedoch sind auch andere gängige Ausgestaltungen wie ITE, RIC, CIC o.ä. denkbar. Das Hörgerät weist eine wiederaufladbare Batterie 6 zur Leistungsversorgung auf, welche im Gehäuse 8 des Hörgerätes 2 angeordnet ist. Weiter weist das Hörgerät 2 in nicht näher dargestellter Weise wenigstens zwei Eingangswandler zur Erzeugung entsprechender Eingangssignale aus einem Umgebungsschall sowie einen Ausgangswandler zu Erzeugung eines Ausgangsschalls anhand eines Ausgangssignals, welches von einer Signalverarbeitungseinheit 10 des Hörgerätes anhand der Eingangssignale in Abhängigkeit einer zu korrigierenden Hörschwäche des Trägers erzeugt wird. Der Ausgangsschall wird beim Betrieb des Hörgerätes 2 in ein Ohrstück 12 eingeleitet, um durch dieses dem Gehör des Trägers zugeführt zu werden. Insbesondere können die Eingangswandler jeweils durch ein Mikrofon gegeben sein, und der Ausgangswandler durch einen Lautsprecher. Ist das Hörgerät 2 in einer anderen Bauform als der dargestellten BTE-Form realisiert, sind auch andere Formen für den Ausgangswandler möglich, z.B. in Form eines Knochenleithörers, sowie Ausgestaltungen mit nur einem Eingangswandler. Das Hörgerät weist weiter einen ersten Datenspeicher 14 auf, in welchem während des Betriebs laufend Betriebsdaten gespeichert werden, und welcher bevorzugt als ein nichtflüchtiger Speicher ausgestaltet ist. Insbesondere kann der erste Datenspeicher 14 in einem nichtflüchtigen Zentralspeicher (nicht dargestellt) des Hörgerätes 2 implementiert sein, in welchem auch ein Betriebssystem und sonstige für die Funktion und den Betrieb des Hörgerätes relevanten Daten hinterlegt sind.

Die benutzerspezifische Signalverarbeitung zum Ausgleich einer Hörschwäche des Trägers erfolgt im Hörgerät in den meisten Fällen derart, dass die Parameter für die auf die Eingangssignale anzuwendende Signalverarbeitung - also z.B. frequenzbandabhängige Verstärkungsfaktoren und Kompressionsverhältnisse und auch entsprechende Zeitkonstanten, Winkel- und Richtparameter für die Bildung von Richtsignalen, Parameter für eine Unterdrückung von Hintergrund rauschen oder eine akustischen Rückkopplung etc. - dynamisch in Abhängigkeit der Eingangssignale erzeugt werden. Hierbei erfolgt eine Analyse der Eingangssignale hinsichtlich einer vorliegenden Hörsituation, wobei eine Hörsituation im Wesentlichen reale akustische Umgebungssituationen hinsichtlich der Art und Anzahl der Nutzsignalquellen sowie hinsichtlich der Art und Stärke der Hintergrundgeräusche standardisiert.

Bei einer ähnlichen realen Umgebungssituation, z.B. ein Gespräch mit einem Gesprächspartner in "lärmiger" Umgebung mit teils diffusen, teils tonalen und gerichteten Hintergrundgeräuschen, wobei der Lärm im einen Fall durch Straßenlärm und im anderen Fall durch die Geräusche in einem Restaurant gegeben ist, wird somit dieselbe Hörsituation festgestellt, und anhand dieser entsprechende standardisierte Parameter der Signalverarbeitung eingestellt. Innerhalb eines Hörprogramms, welches einer speziellen Hörsituation zugeordnet ist, können dabei in Abhängigkeit der Eingangssignale und somit des Umgebungsschalls noch weitere Anpassungen der Parameter erfolgen. So kann z.B. ein Kompressionsverhältnis angehoben werden, oder die zugehörige Einregelzeit verringert werden, wenn ein Gesprächspartner zu kurzfristigen und sehr lauten, aufschreiartigen Äußerungen neigt, welche im Ausgangsschall des Hörgerätes 2 bei dessen Träger ggf. zu unangenehm lauten Klängen führen könnten.

Überdies kann jedoch der Träger durch eine Benutzereingabe - z.B. über eine dedizierte Fernbedienung für das Hörgerät 2, über eine entsprechende Applikation auf einem Mobiltelefon oder über nicht näher dargestellte Bedienelemente am Hörgerät 2 selbst - die automatisch anhand der akustischen Umgebungssituationen bestimmten Hörprogramme, aber auch einzelne Parameter der Signalverarbeitung, selbst korrigieren, oder zumindest noch auf einen Vorschlag der Signalverarbeitung hin bestätigen.

Als Betriebsdaten können nun im ersten Speicher 14 einerseits sämtliche akustischen Messdaten hinterlegt werden, deren Analyse eine konkrete Hörsituation ergab, sowie die vom Träger diesbezüglich durchgeführten Benutzereingaben hinsichtlich der Auswahl eines der Hörsituation zugeordneten Hörprogrammes sowie hinsichtlich den im Hörprogramm voreingestellten Parameterwerten der Signalverarbeitung (z.B. Absenkung einer maximalen Lautstärke unter Beibehaltung des Hörprogrammes). Eine derartige Speicherung kann einerseits immer dann erfolgen, wenn eine Benutzereingabe erfolgt, oder es kann anhand der Abwesenheit einer Benutzereingabe auch darauf geschlossen werden, dass der Träger mit dem voreingestellten Hörprogramm und dessen Parametern zufrieden ist. Um diese Informationen für eine automatische Anpassung ebenfalls nutzbar zu machen, kann eine Speicherung der Betriebsdaten in regelmäßigen Zeitabständen und/oder bei jeder neu ermittelten Hörsituation oder erheblichen Änderung der akustischen Umgebungssituation erfolgen.

Das Hörgerät 2 befindet sich bezüglich der Ladestation 4 in einer Ladeposition 16, welche dadurch gegeben ist, dass das Hörgerät 2 in einem Ladeschacht 18 der Ladestation 4 positioniert ist, welcher von einem Deckel 19 verschlossen werden kann. In dieser Ladeposition 16 ist das Hörgerät 2 dazu eingerichtet, über einen induktiven Überträger 20 der Ladestation 4, welcher von Leistungsquelle 22 der Ladestation 4 gespeist wird, Energie zu empfangen, um dadurch die Batterie 6 zu entladen. Hierfür kann das Hörgerät 2 in nicht dargestellter Weise einen induktiven Empfänger zum Empfangen der vom induktiven Überträger 20 ausgegebenen Energie aufweisen. Als Leistungsquelle 22 kann hierbei generell jede Quelle umfasst sein, welche eine für ein Aufladen der Batterie 6 des Hörgerätes 2 geeignete Leistung bereitzustellen imstande ist, also insbesondere auch ein entsprechender Leistungstransformator, welcher mit einem Netzteil (nicht dargestellt) der Ladestation 4 verbunden ist, o.ä.

Das Hörgerät 2 befindet sich in der Darstellung gemäß Fig. 1 zusätzlich auch in einer Übertragungsposition 24 bezüglich der Ladestation 4, wobei die Übertragungsposition 24 vorliegend identisch ist zur Ladeposition 16, und somit darin gegeben ist, dass das Hörgerät 2 im Ladeschacht 18 eingelegt ist. Das Hörgerät 2 weist dabei eine Antenne 26 auf, welche u.a. mit dem ersten Datenspeicher 14 verbunden ist, und dazu eingerichtet ist, die dort im Betrieb des Hörgerätes 2 gespeicherten Betriebsdaten an eine entsprechende Antenne 28 der Ladestation zu übertragen, von welcher aus sie auf einem nichtflüchtigen zweiten Datenspeicher 30 der Ladestation 4 hinterlegt werden. Die Übertragung kann dabei z.B. mittels Bluetooth o.ä. erfolgen.

Es sind jedoch auch zueinander unterschiedliche Ausgestaltungen der Ladeposition 16 und der Übertragungsposition 24 denkbar, beispielsweise im Fall, dass die Energieübertragung zum Aufladen der Batterie 6 und die Übertragung der Betriebsdaten zwischen dem Hörgerät 2 und der Ladestation 4 durch ein Ladekabel und ein hiervon getrenntes Übertragungskabel implementiert sind. In diesem Fall ist die Ladeposition 16 bzw. die Übertragungsposition 24 insbesondere durch eine Verbindung des entsprechenden Kabels vom Hörgerät 2 zur Ladestation 4 gegeben.

In der Lade- und Übertragungsposition 16 bzw. 24 des Hörgerätes 2 kann somit einerseits ein Aufladen der Batterie 6 erfolgen, und andererseits, entweder zeitgleich, oder zeitversetzt und somit zu Zeitpunkten, in welchen eine Energieübertragung über den induktiven Überträger 20 vorübergehend ausgesetzt ist, eine Übertragung der Betriebsdaten vom ersten Speicher 14 des Hörgerätes 2 über die Antennen 26 und 28 zum zweiten Speicher 30 der Ladestation 4. Im zweiten Datenspeicher 30 werden die vom Hörgerät 2 übertragenen Betriebsdaten gespeichert.

Nach einer erfolgreichen Speicherung im zweiten Datenspeicher 30 kann dabei von der Ladestation 4 aus ein entsprechendes Bestätigungssignal an das Hörgerät 2, beispielsweise über die beiden Antennen 26, 28, übertragen werden, damit die erfolgreiche Sicherung der Betriebsdaten im zweiten Datenspeicher 30 vom Hörgerät 2 dazu genutzt werden kann, Speicherplatz im ersten Datenspeicher 14 für ein Speichern von Betriebsdaten einer nachfolgenden Betriebsphase freizugeben. Da der zweite Datenspeicher 30 in der Ladestation 4 angeordnet ist, kann er wesentlich größer dimensioniert werden als der erste Datenspeicher 14, welcher den räumlichen Beschränkungen des Hörgerätes 2 unterworfen ist. Somit kann auf dem zweiten Datenspeicher 30 eine langfristige Historie an Betriebsdaten gespeichert werden, welche zum Anpassen der Signalverarbeitung des Hörgerätes 2 herangezogen werden kann.

Hierfür können die umfangreichen Betriebsdaten, welche im zweiten Datenspeicher 30 hinterlegt sind, über die Antennen 28 und 26 von der Ladestation 4 an das Hörgerät 2 übertragen werden, während dieses in der Übertragungsposition 24 angeordnet ist, wobei diese Übertragung bevorzugt vor der Übertragung der im ersten Speicher des Hörgerätes 2 gespeicherten Betriebsdaten an die Ladestation 4 oder danach erfolgen kann. Auch eine zeitgleiche Übertragung mittels eines entsprechenden bidirektionalen Übertragungsprotokolls ist denkbar.

Die Betriebsdaten des zweiten Datenspeichers 30, welche nun an das Hörgerät 2 übertragen worden sind, können dort auf einer Rechnereinheit 32, auf welcher bevorzugt auch die Signalverarbeitungseinheit 10 physisch implementiert ist, dazu verwendet werden, einzelne Parameter der Signalverarbeitung anzupassen. Hierbei können als Parameter beispielsweise eine frequenzbandabhängige Verstärkung oder Kompression o.ä., und insbesondere eine Zuordnung zu einer ermittelten Hörsituation oder zu sonstigen akustischen Messdaten, welche den Eingangssignalen entnehmbar sind und anhand derer ein Signalverarbeitung im Hörgerät 2 üblicherweise erfolgt, angepasst werden. Die angepassten Parameter werden dann in einem nichtflüchtigen Speicher des Hörgerätes 2 hinterlegt, so dass in einer dieser Anpassung nachfolgenden Betriebsphase die angepassten Parameter für die Signalverarbeitung verwendet werden. Der besagte nichtflüchtige Speicher kann dabei physisch insbesondere auf demselben Speicher implementiert sein, auf welchem auch der erste Datenspeicher 14 implementiert ist.

Eine zur Erfindung alternative Ausgestaltung der Anpassung, in welcher Teile der Anpassung auf einer eigens dazu vorgesehenen Rechnereinheit (nicht dargestellt) der Ladestation 4 durchgeführt wird, um anschließend die angepassten Parameter an das Hörgerät 2 zu übertragen, ist ebenso denkbar. Eine Durchführung der für die Anpassung notwendigen Rechenschritte auf der Rechnereinheit 32 des Hörgerätes 2 hat den Vorteil, dass hierdurch keine eigene Rechnereinheit in der Ladestation 4 erforderlich ist. Zusätzliche Rechnerkapazitäten auf der Ladestation 4 können jedoch die Anpassung beschleunigen.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

### Bezugszeichenliste

- 1: Hörgeräte-System
- 2: Hörgerät
- 4: Ladestation
- 6: Batterie
- 8: Gehäuse (des Hörgerätes)
- 10: Signalverarbeitungseinheit
- 12: Ohrstück
- 14: erster Datenspeicher
- 16: Ladeposition
- 18: Ladeschacht
- 19: Deckel
- 20: induktiver Überträger
- 22: Leistungsquelle
- 24: Übertragungsposition
- 26: Antenne (des Hörgerätes)
- 28: Antenne (der Ladestation)
- 30: zweiter Datenspeicher
- 32: Rechnereinheit

## Patentansprüche

1. Hörgeräte-System (1), umfassend
- ein Hörgerät (2), welches eine wiederaufladbare Batterie (6) zur Leistungsversorgung und einen ersten Datenspeicher (14) zum Speichern von Betriebsdaten aufweist, und
- eine Ladestation (14), welche einen nichtflüchtigen zweiten Datenspeicher (30) aufweist,
wobei die Ladestation (4) dazu eingerichtet ist, die Batterie (6) des Hörgerätes (2) wenigstens zeitweise zu laden, wenn das Hörgerät (82) bezüglich der Ladestation (4) in einer Ladeposition (16) angeordnet ist,
wobei das Hörgerät (2) dazu eingerichtet ist, während des Betriebs laufend Betriebsdaten im ersten Datenspeicher (14) für nachträgliche automatisierte Lernvorgänge zu speichern, und dazu eingerichtet ist, im ersten Datenspeicher (14) gespeicherte Betriebsdaten an die Ladestation (4) zu übertragen, wenn das Hörgerät (2) bezüglich der Ladestation (4) in einer Übertragungsposition (24) angeordnet ist,
wobei Hörgerät (2) dazu eingerichtet ist, als Betriebsdaten eine Information zu einer vorliegenden Hörsituation und/oder vom Hörgerät erhobene akustische Messdaten und/oder eine Benutzereingabe einer Benutzer-Präferenz hinsichtlich der Signalverarbeitung für eine vorliegende Hörsituation und/oder einen vorliegender Wertes eines die Signalverarbeitung des Hörgerätes betreffenden Parameters zu speichern,
wobei die Ladestation (4) dazu eingerichtet ist, vom Hörgerät (2) übertragene Betriebsdaten im zweiten Datenspeicher (30) zu speichern,
**dadurch gekennzeichnet,**
**dass** der zweite Datenspeicher (30) größer dimensioniert ist, als der erste Datenspeicher (14),
**dass** die Ladestation (4) weiter dazu eingerichtet ist, im zweiten Datenspeicher (30) gespeicherte ältere Betriebsdaten, welche bei vorangegangenen Ladevorgängen auf den zweiten Datenspeicher (30) übertragen und dort als Teil einer langfristigen Historie an Betriebsdaten gespeichert wurden, an das Hörgerät (2) zurück zu übertragen, wenn das Hörgerät (2) in der Übertragungsposition (30) angeordnet ist, und dass
das Hörgerät (2) weiter eine Rechnereinheit (32) aufweist, welche dazu eingerichtet ist, anhand der von der Ladestation (4) an das Hörgerät (2) übertragenen älteren Betriebsdaten wenigstens einen eine Signalverarbeitung des Hörgerätes (2) betreffenden Parameter mittels eines maschinellen Lernalgorithmus anzupassen.

2. Hörgeräte-System (1) nach Anspruch 1,
wobei die Ladestation (4) dazu eingerichtet ist, die Batterie (6) des Hörgerätes mittels einer drahtlosen Energieübertragung an das Hörgerät (2) zu laden.

3. Hörgeräte-System (1) nach Anspruch 1,
wobei die Ladestation (4) dazu eingerichtet ist, die Batterie (6) des Hörgerätes mittels einer galvanischen Kopplung zur Energieübertragung an das Hörgerät (2) zu laden.

4. Hörgeräte-System (1) nach einem der vorhergehenden Ansprüche,
wobei das Hörgerät (2) dazu eingerichtet ist, im ersten Datenspeicher (14) gespeicherte Betriebsdaten drahtlos an die Ladestation (4) zu übertragen.

5. Hörgeräte-System (1) nach einem der vorhergehenden Ansprüche,
wobei die Ladestation (4) dazu eingerichtet ist, die im zweiten Datenspeicher (30) gespeicherten Betriebsdaten drahtlos an das Hörgerät (2) zu übertragen.

6. Hörgeräte-System (1) nach einem der Ansprüche 1 bis 3,
wobei das Hörgerät (2) dazu eingerichtet ist, im ersten Datenspeicher (14) gespeicherte Betriebsdaten mittels einer galvanischen Kopplung zur Datenübertragung an die Ladestation (4) zu übertragen.

7. Verfahren zum Anpassen wenigstens eines eine Signalverarbeitung eines Hörgerätes (2) betreffenden Parameters,
wobei während einer ersten Betriebsphase des Hörgerätes (2) laufend erste Betriebsdaten in einem ersten Datenspeicher (14) des Hörgerätes (2) gespeichert werden,
wobei als Betriebsdaten eine Information zu einer vorliegenden Hörsituation und/oder vom Hörgerät erhobene akustische Messdaten und/oder eine Benutzereingabe einer Benutzer-Präferenz hinsichtlich der Signalverarbeitung für eine vorliegende Hörsituation und/oder einen vorliegender Wertes eines die Signalverarbeitung des Hörgerätes betreffenden Parameters gespeichert werden,
wobei während einer ersten Ladephase des Hörgerätes (2) eine wiederaufladbare Batterie (6) im Hörgerät (2) durch eine Ladestation (4) wenigstens zeitweise aufgeladen wird,
wobei während der ersten Ladephase (4) wenigstens ein erster Teildatensatz der im ersten Datenspeicher (14) des Hörgerätes (2) gespeicherten ersten Betriebsdaten auf einen nichtflüchtigen zweiten Datenspeicher (30) der Ladestation (4) übertragen wird, welcher größer dimensioniert ist, als der erste Datenspeicher (14) des Hörgerätes, sodass der erste Teildatensatz dort als Teil einer langfristigen Historie an Betriebsdaten gespeichert wird,
wobei während einer zweiten Ladephase des Hörgerätes (2) die wiederaufladbare Batterie (6) im Hörgerät (2) durch die Ladestation (4) wenigstens zeitweise aufgeladen wird, und aus dem zweiten Datenspeicher (30) wenigstens ein zweiter Teildatensatz der ersten Betriebsdaten an das Hörgerät (2) übertragen wird,
wobei durch eine Rechnereinheit (32) des Hörgerätes (2) anhand des zweiten Teildatensatzes an ersten Betriebsdaten der wenigstens eine Parameter der Signalverarbeitung mittels eines maschinellen Lernalgorithmus angepasst wird.

8. Verfahren nach Anspruch 7,
wobei während der ersten Ladephase (4) im Wesentlichen alle im ersten Datenspeicher (14) des Hörgerätes (2) gespeicherten ersten Betriebsdaten auf den nichtflüchtigen zweiten Datenspeicher (30) der Ladestation (4) übertragen werden.

9. Verfahren nach Anspruch 7 oder Anspruch 8,
wobei während einer zweiten Betriebsphase des Hörgerätes (2) zweite Betriebsdaten in einem ersten Datenspeicher (14) des Hörgerätes (2) gespeichert werden, und
wobei der wenigstens eine Parameter der Signalverarbeitung anhand des zweiten Teildatensatzes an ersten Betriebsdaten und anhand wenigstens eines zweiten Teildatensatzes der zweiten Betriebsdaten durch die Rechnereinheit (32) des Hörgerätes (2) angepasst wird.

## Claims

1. Hearing aid system (1), comprising
- a hearing aid (2), which has a rechargeable battery (6) for the power supply and a first data memory (14) for storing operating data, and
- a charging station (14), which has a nonvolatile second data memory (30),
wherein the charging station (4) is configured to at least temporarily charge the battery (6) of the hearing aid (2) when the hearing aid (82) is arranged in a charging position (16) with respect to the charging station (4),
wherein the hearing aid (2) is configured to store operating data continuously during operation in the first data memory (14) for subsequent automated learning processes, and is configured to transfer operating data stored in the first data memory (14) to the charging station (4) when the hearing aid (2) is arranged in a transfer position (24) with respect to the charging station (4),
wherein the hearing aid (2) is configured to store as operating data information with respect to an existing hearing situation and/or acoustic measurement data collected by the hearing aid and/or a user input of the user preference with respect to the signal processing function for an existing hearing situation and/or an existing value of a parameter relating to the signal processing function of the hearing aid, wherein the charging station (4) is configured to store operating data transferred from the hearing aid (2) in the second data memory (30),
**characterized in that**
the second data memory (30) is dimensioned larger than the first data memory (14),
the charging station (4) is furthermore configured to transfer older operating data stored in the second data memory (30), which were transferred during preceding charging processes to the second data memory (30) and stored therein as part of a long-term history of operating data, back to the hearing aid (2) when the hearing aid (2) is arranged in the transfer position (30), and
the hearing aid (2) furthermore has a computer unit (32), which is configured to adapt at least one parameter relating to a signal processing function of the hearing aid (2) by means of a machine learning algorithm on the basis of the older operating data transferred from the charging station (4) to the hearing aid (2).

2. Hearing aid system (1) according to Claim 1,
wherein the charging station (4) is configured to charge the battery (6) of the hearing aid by means of a wireless energy transfer to the hearing aid (2).

3. Hearing aid system (1) according to Claim 1,
wherein the charging station (4) is configured to charge the battery (6) of the hearing aid by means of a galvanic coupling for the energy transfer to the hearing aid (2).

4. Hearing aid system (1) according to any one of the preceding claims,
wherein the hearing aid (2) is configured to transfer operating data stored in the first data memory (14) wirelessly to the charging station (4).

5. Hearing aid system (1) according to any one of the preceding claims,
wherein the charging station (4) is configured to transfer the operating data stored in the second data memory (30) wirelessly to the hearing aid (2).

6. Hearing aid system (1) according to any one of Claims 1 to 3,
wherein the hearing aid (2) is configured to transfer operating data stored in the first data memory (14) to the charging station (4) by means of a galvanic coupling for the data transfer.

7. Method for adapting at least one parameter relating to a signal processing function of a hearing aid (2),
wherein during a first operating phase of the hearing aid (2), first operating data are continuously stored in a first data memory (14) of the hearing aid (2),
wherein information on an existing hearing situation and/or acoustic measurement data collected by the hearing aid and/or a user input of the user preference with respect to the signal processing for an existing hearing situation and/or an existing value of a parameter relating to the signal processing function of the hearing aid or stored as operating data, wherein during a first charging phase of the hearing aid (2), a rechargeable battery (6) in the hearing aid (2) is at least temporarily charged by a charging station (4),
wherein during the first charging phase (4), at least a first personal data set of the first operating data stored in the first data memory (14) of the hearing aid (2) is transferred to a nonvolatile second data memory (30) of the charging station (4), which is dimensioned larger than the first data memory (14) of the hearing aid, so that the first personal data set is stored there as part of a long-term history of operating data,
wherein during a second charging phase of the hearing aid (2), the rechargeable battery (6) in the hearing aid (2) is at least temporarily charged by the charging station (4), and at least one second partial data set of the first operating data is transferred to the hearing aid (2) from the second data memory (30),
wherein the at least one parameter of the signal processing function is adapted by means of a machine learning algorithm by a computer unit (32) of the hearing aid (2) on the basis of the second partial data set of first operating data.

8. Method according to Claim 7,
wherein during the first charging phase (4), essentially all first operating data stored in the first data memory (14) of the hearing aid (2) are transferred to the nonvolatile second data memory (30) of the charging station (4).

9. Method according to Claim 7 or Claim 8,
wherein during a second operating phase of the hearing aid (2), second operating data are stored in a first data memory (14) of the hearing aid (2), and
wherein the at least one parameter of the signal processing function is adapted by the computer unit (32) of the hearing aid (2) on the basis of the second partial data set of first operating data and on the basis of at least one second partial data set of the second operating data.

## Revendications

1. Système d'aide auditive (1), comprenant
- une aide auditive (2) qui comporte une batterie chargeable (6) destinée à l'alimentation de puissance et une première mémoire de données (14) destinée à mémoriser des données de fonctionnement, et
- une station de charge (14) qui comporte une deuxième mémoire de données non volatile (30),
la station de charge (4) étant conçue pour charger la batterie (6) de l'aide auditive (2) au moins temporairement lorsque l'aide auditive (82) est disposée dans une position de charge (16) par rapport à la station de charge (4),
l'aide auditive (2) étant conçue pour mémoriser en continu des données de fonctionnement dans la première mémoire de données (14) pendant le fonctionnement en vue de processus d'apprentissage automatisés ultérieurs, et étant conçue pour transmettre des données de fonctionnement mémorisées dans la première mémoire de données (14) à la station de charge (4), lorsque l'aide auditive (2) est disposée dans une position de transmission (24) par rapport à la station de charge (4),
l'aide auditive (2) étant conçue pour recevoir, comme données de fonctionnement, une information relative à une situation auditive actuelle et/ou des données de mesure acoustique collectées par l'aide auditive et/ou une entrée d'utilisateur d'une préférence d'utilisateur concernant le traitement de signal pour une situation auditive actuelle et/ou une valeur actuelle d'un paramètre concernant le traitement de signal de l'aide auditive,
la station de charge (4) étant conçue pour mémoriser des données de fonctionnement, transmises par l'aide auditive (2), dans la deuxième mémoire de données (30), **caractérisé en ce que**
la deuxième mémoire de données (30) est plus grande que la première mémoire de données (14),
la station de charge (4) est en outre conçue pour transmettre des données de fonctionnement plus anciennes, qui ont été mémorisées dans la deuxième mémoire de données (30), qui ont été transmises dans la deuxième mémoire de données (30) lors de processus de charge précédents et qui ont été mémorisées dans celle-ci comme partie d'un long historique de données de fonctionnement, pour les retransmettre à l'aide auditive (2) lorsque l'aide auditive (2) est disposée dans la position de transmission (30), et
l'aide auditive (2) comprend en outre une unité informatique (32) qui est conçue pour adapter au moins un paramètre relatif au traitement de signal de l'aide auditive (2) au moyen d'un algorithme d'apprentissage automatique sur la base des données de fonctionnement plus anciennes transmises à l'aide auditive (2) par la station de charge (4).

2. Système d'aide auditive (1) selon la revendication 1,
la station de charge (4) étant conçue pour charger la batterie (6) de l'aide auditive au moyen d'une transmission d'énergie sans fil à l'aide auditive (2).

3. Système d'aide auditive (1) selon la revendication 1,
la station de charge (4) étant conçue pour charger la batterie (6) de l'aide auditive au moyen d'un couplage galvanique de transmission de l'énergie à l'aide auditive (2).

4. Système d'aide auditive (1) selon l'une des revendications précédentes,
l'aide auditive (2) étant conçue pour transmettre sans fil des données de fonctionnement, mémorisées dans la première mémoire de données (14), à la station de charge (4).

5. Système d'aide auditive (1) selon l'une des revendications précédentes,
la station de charge (4) étant conçue pour transmettre sans fil les données de fonctionnement, mémorisées dans la deuxième mémoire de données (30), à l'aide auditive (2) .

6. Système d'aide auditive (1) selon l'une des revendications 1 à 3,
l'aide auditive (2) étant conçue pour transmettre des données de fonctionnement, mémorisées dans la première mémoire de données (14), à la station de charge (4) au moyen d'un couplage galvanique de transmission de données.

7. Procédé d'adaptation d'au moins un paramètre relatif au traitement de signal d'une aide auditive (2),
pendant une première phase de fonctionnement de l'aide auditive (2), des premières données de fonctionnement étant mémorisées en continu dans une première mémoire de données (14) de l'aide auditive (2),
une information relative à une situation auditive actuelle et/ou des données de mesure acoustique collectées par l'aide auditive et/ou une entrée d'utilisateur d'une préférence d'utilisateur concernant le traitement de signal pour une situation auditive actuelle et/ou une valeur actuelle d'un paramètre relatif au traitement de signal de l'aide auditive étant mémorisée comme données de fonctionnement, pendant une première phase de charge de l'aide auditive (2), une batterie rechargeable (6) située dans l'aide auditive (2) étant chargée au moins temporairement par une station de charge (4),
pendant la première phase de charge (4), au moins un premier sous-ensemble de données des premières données de fonctionnement mémorisées dans la première mémoire de données (14) de l'aide auditive (2) étant transmis à une deuxième mémoire de données non volatile (30) de la station de charge (4), laquelle est dimensionnée pour être plus grande que la première mémoire de données (14) de l'aide auditive, de sorte que le premier sous-ensemble de données est mémorisé dans celle-ci comme partie d'un long historique de données de fonctionnement,
pendant une deuxième phase de charge de l'aide auditive (2), la batterie rechargeable (6) située dans l'aide auditive (2) étant chargée au moins temporairement par la station de charge (4), et au moins un deuxième sous-ensemble de données des premières données de fonctionnement étant transmis à l'aide auditive (2) à partir de la deuxième mémoire de données (30),
l'au moins un paramètre du traitement de signal étant adapté par une unité informatique (32) de l'aide auditive (2) sur la base du deuxième sous-ensemble de données de premières données de fonctionnement au moyen d'un algorithme d'apprentissage automatique.

8. Procédé selon la revendication 7,
pendant la première phase de charge (4), sensiblement toutes les premières données de fonctionnement mémorisées dans la première mémoire de données (14) de l'aide auditive (2) étant transmises à la deuxième mémoire de données non volatile (30) de la station de charge (4).

9. Procédé selon la revendication 7 ou la revendication 8,
pendant une deuxième phase de fonctionnement de l'aide auditive (2), des deuxièmes données de fonctionnement étant mémorisées dans une première mémoire de données (14) de l'aide auditive (2), et
l'au moins un paramètre du traitement de signal étant adapté sur la base du deuxième sous-ensemble de données de premières données de fonctionnement et sur la base d'au moins un deuxième sous-ensemble de données des deuxièmes données de fonctionnement par l'unité informatique (32) de l'aide auditive (2).
